# EUROPÄISCHE PATENTANMELDUNG

(11) **EP 2 101 197 A1**
(43) Veröffentlichungstag der Anmeldung: **16.09.2009**
(21) Anmeldenummer: 09001233.7
(22) Anmeldetag: 29.01.2009
(51) Int. Cl.: G01V 8/16

(54) **Gabellichtschranke**

(30) Priorität: 14.03.2008 DE 102008014350
(71) Anmelder: Leuze electronic GmbH + Co. KG, 73277 Owen/Teck (DE)
(72) Erfinder: Huß, Jörg, 73230 Kirchheim/Teck (DE)
(74) Vertreter: Ruckh, Rainer Gerhard

(57) **Zusammenfassung**

Die Erfindung betrifft eine Gabellichtschranke (1) mit einem zwei Gabelarme (3b, 3c) aufweisenden Gehäuse (3), in welchem ein Lichtstrahlen (5) emittierender Sender (6), ein Lichtstrahlen (5) empfangender Empfänger (7) und eine Auswerteeinheit (8), in welcher in Abhängigkeit der Empfangssignale am Ausgang des Empfängers (7) ein Objektfeststellungssignal generiert wird, integriert sind. Ein zu detektierendes Objekt (2) ist zwischen den Gabelarmen (3b, 3c) des Gehäuses (3) angeordnet. Die vom Sender (6) emittierten Lichtstrahlen (5) sind an einer Austrittsfläche (9) eines ersten Gabelarms (3b) aus dem Gehäuse (3) herausgeführt und treffen auf das Objekt (2). Der das Objekt (2) durchsetzende Teil der Lichtstrahlen (5) ist an einer Eintrittsfläche des zweiten Gabelarms (3c) in das Gehäuse (3) geführt. Der Sender (6) und der Empfänger (7) sind auf einer Leiterplatte (4) angeordnet. Vom Sender (6) ist ein Lichtleiter (11) zur Austrittsfläche (9) geführt. Alternativ oder zusätzlich ist vom Empfänger (7) ein Lichtleiter (11') zur Eintrittsfläche (10) geführt, wobei in dem oder den Lichtleitern (11, 11') die Lichtstrahlen (5) verlaufen.

## Beschreibung

Die Erfindung betrifft eine Gabellichtschranke.

Derartige Gabellichtschranken weisen generell ein Gehäuse mit zwei in Abstand zueinander parallel verlaufenden Gabelarmen auf. In diesem Gehäuse sind ein Lichtstrahlen emittierender Sender, ein Lichtstrahlen empfangender Empfänger sowie eine Auswerteeinheit integriert, deren Komponenten auf einer Leiterplatte angeordnet sein können. In einem ersten Gabelarm ist der Sender, gegebenenfalls mit einer vorgeordneten Sendeoptik so angeordnet, dass dieser in geringem Abstand zu einer Austrittsfläche in der Wand des Gabelarms positioniert ist. In dem anderen Gabelarm ist der Empfänger, gegebenenfalls mit einer vorgeordneten Empfangsoptik so angeordnet, dass dieser in geringem Abstand zu einer Eintrittsfläche in der Wand dieses Gabelarms positioniert ist.

Ein zu detektierendes Objekt ist im Zwischenraum zwischen den Gabelarmen angeordnet. Die vom Sender emittierten Lichtstrahlen durchsetzen die Austrittsfläche des ersten Gabelarms und treffen auf das Objekt. Der das Objekt durchsetzende Anteil der Lichtstrahlen wird über die Eintrittsfläche des zweiten Gabelarms zum Empfänger geführt.

In der Auswerteeinheit wird in Abhängigkeit der Empfangssignale des Empfängers ein Objektfeststellungssignal generiert. Im einfachsten Fall bildet das Objektfeststellungssignal ein binäres Schaltsignal, das durch eine Schwellwertbewertung der Empfangssignale gewonnen wird. Die Schaltzustände des Objektfeststellungssignals geben dann an, ob ein Objekt vorhanden ist oder nicht.

Prinzipiell kann der Sender mit den Komponenten einer Ansteuerelektronik auf einer ersten Leiterplatte platziert sein, wobei diese Leiterplatte im ersten Gabelarm angeordnet ist. Der Empfänger mit den Komponenten der Auswerteeinheit ist dann im zweiten Gabelarm angeordnet. Nachteilig hierbei ist, dass das Vorsehen zweier Leiterplatten einen unerwünscht hohen Teile- und Materialaufwand bedingt. Zudem weisen beide Gabelarme eine unerwünscht große Bauhöhe auf, da neben den Leiterplatten auch die optischen Elemente, das heißt der Sender mit der Sendeoptik einerseits und der Empfänger mit der Empfangsoptik andererseits jeweils in einem Gabelarm untergebracht werden müssen.

Weiterhin ist es bekannt, bei Gabellichtschranken nur eine Leiterplatte vorzusehen, die in einem der Gabelarme untergebracht ist. Auf dieser Leiterplatte ist neben den Komponenten der Ansteuerelektronik für den Sender und der Auswerteeinheit auch der Sender oder Empfänger so angeordnet, dass dieser mit dem zugeordneten Optikelement, das heißt der Sende- oder Empfangsoptik, hinter der Austrittsfläche oder der Eintrittsfläche liegt. Das jeweils andere optoelektronische Element, das heißt der Empfänger oder Sender, ist dann mit dem zugeordneten Optikelement im jeweils anderen Gabelarm hinter der Eintrittsfläche oder der Austrittsfläche angeordnet. Die elektrische Verbindung dieses optoelektronischen Elements zur Leiterplatte wird dann über elektrische Zuleitungen in Form von Litzen realisiert. Da die Litzen über nahezu die gesamte Länge des Gehäuses geführt werden, bilden diese Antennen, in welche verstärkt elektromagnetische Störungen eingekoppelt werden. Die so ausgebildete Gabellichtschranke ist somit äußerst störungsempfindlich.

Ein weiterer Nachteil besteht darin, dass die Gabelarme jeweils eine unerwünscht große Bauhöhe aufweisen, da in jedem der Gabelarme mit dem Sender und Empfänger und der zugeordneten Sende- oder Empfangsoptik ein optoelektronisches und ein optisches Bauelement untergebracht werden muss. Hinzu kommt, dass in einem der Gabelarme die Leiterplatte angeordnet werden muss.

Der Erfindung liegt die Aufgabe zugrunde, eine Gabellichtschranke der eingangs genannten Art bereitzustellen, welche kostengünstig herstellbar ist und eine kompakte Bauform aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Gabellichtschranke umfasst ein zwei Gabelarme aufweisendes Gehäuse, in welchem ein Lichtstrahlen emittierender Sender, ein Lichtstrahlen empfangender Empfänger und eine Auswerteeinheit, in welcher in Abhängigkeit der Empfangssignale am Ausgang des Empfängers ein Objektfeststellungssignal generiert wird, integriert sind. Ein zu detektierendes Objekt ist zwischen den Gabelarmen des Gehäuses angeordnet. Die vom Sender emittierten Lichtstrahlen sind an einer Austrittsfläche eines ersten Gabelarms aus dem Gehäuse herausgeführt und treffen auf das Objekt. Der das Objekt durchsetzende Teil der Lichtstrahlen ist an einer Eintrittsfläche des zweiten Gabelarms in das Gehäuse geführt. Der Sender und der Empfänger sind auf einer Leiterplatte angeordnet. Vom Sender ist ein Lichtleiter zur Austrittsfläche geführt. Alternativ oder zusätzlich ist vom Empfänger ein Lichtleiter zur Eintrittsfläche geführt, wobei in dem oder den Lichtleitern die Lichtstrahlen verlaufen.

Da bei der erfindungsgemäßen Gabellichtschranke sowohl der Sender als auch der Empfänger auf einer gemeinsamen Leiterplatte platziert werden können, kann die Anzahl der elektronischen Komponenten der Gabellichtschranke gering gehalten werden. Weiterhin ist vorteilhaft, dass durch die Führung eines Lichtleiters vom Sender oder Empfänger zur Austrittsfläche oder Eintrittsfläche der Gabelarm, in welchem dieser Lichtleiter geführt wird, eine sehr geringe Bauhöhe aufweisen kann. Besonders vorteilhaft ist die Leiterplatte mit dem Sender und Empfänger in einem Grundkörper des Gehäuses, an welchem die Gabelarme ausmünden, integriert. Dann kann ein erster Lichtleiter vom Sender zur Austrittsfläche in einem ersten Gabelarm und ein zweiter Lichtleiter vom Empfänger zur Eintrittsfläche im zweiten Gabelarm geführt werden. In diesem Fall können beide Gabelarme eine sehr geringe Bauhöhe aufweisen.

Ein weiterer Vorteil der erfindungsgemäßen Gabellichtschranke besteht darin, dass die in dem oder den Gabelarmen geführten Lichtleiter rein optische Elemente bilden, das heißt in den Gabelarmen müssen keine Litzen zum elektrischen Anschluss eines Senders oder Empfängers geführt werden. Damit entfallen die gegen elektromagnetische Störungen empfindlichen Litzen, so dass die erfindungsgemäße Gabellichtschranke unempfindlich gegen elektromagnetische Störungen ist.

Weiterhin ist vorteilhaft, dass die Lichtleiter gekrümmt werden können, so dass zur Führung der Lichtleiter in den Gabelarmen notwendige Umlenkungen der Lichtleiter einfach realisiert werden können. Vorteilhaft können die Lichtleiter im Bereich dieser Umlenkungen auch Abschrägungen aufweisen. An diesen Abschrägungen erfolgt eine definierte Umlenkung der im Lichtleiter geführten Lichtstrahlen, so dass die Lichtstrahlen nahezu vollständig innerhalb des Lichtleiters geführt sind, das heißt es treten nur geringe optische Verluste durch Austritt partieller Lichtstrahlen an den Mantelflächen der Lichtleiter auf.

Um auch diese geringen optischen Verluste zu eliminieren, können die Mantelflächen der Lichtleiter verspiegelt, insbesondere metallisiert sein.

In einer vorteilhaften Ausführungsform der Erfindung kann an dem freien Ende eines Lichtleiters, der der Austrittsfläche oder der Eintrittsfläche in einem Gabelarm gegenüberliegt, eine Auskoppeloptik oder eine Einkoppeloptik vorgesehen sein, um entweder einen engen, definierten Strahlquerschnitt der dort austretenden Lichtstrahlen zu erhalten oder um möglichst effizient auftreffende Lichtstrahlen in den Lichtleiter einzukoppeln. Diese Auskoppeloptik oder Einkoppeloptik kann besonders einfach und kostengünstig durch Aufspritzen einer Kunststoffmasse auf das freie Ende des Lichtleiters hergestellt werden. Da die Auskoppeloptik oder Einkoppeloptik damit einstückig mit dem Lichtleiter ausgebildet ist und so kein weiteres separates Bauteil darstellt, wird die zur Ausbildung der Gabellichtschranke benötigte Anzahl an Einzelteilen weiter reduziert.

Die Erfindung wird im Folgenden anhand der Zeichnungen erläutert. Es zeigen:
- Figur 1:: Schematische Darstellung eines ersten Ausführungsbeispiels einer Gabellichtschranke.
- Figur 2:: Schematische Darstellung eines zweiten Ausführungsbeispiels einer Gabellichtschranke.

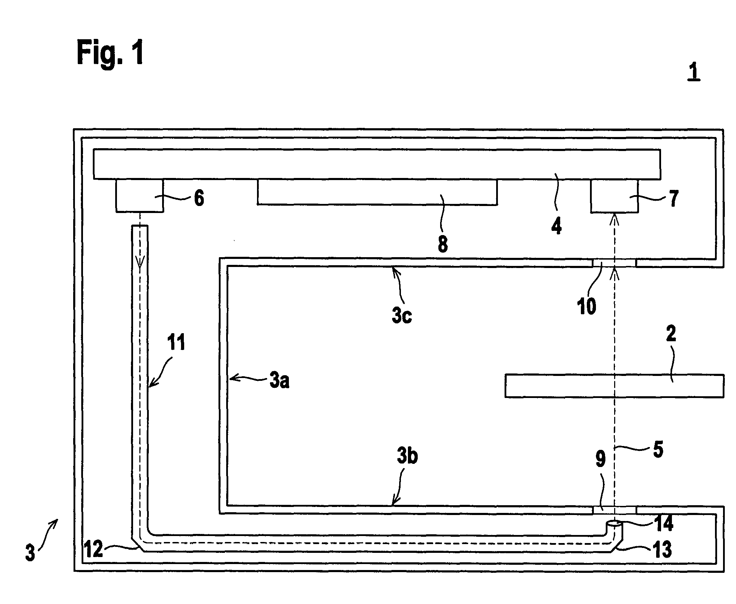

Figur 1 zeigt ein erstes Ausführungsbeispiel einer Gabellichtschranke 1 zur Detektion von Objekten 2 in einem Überwachungsbereich. Die Komponenten der Gabellichtschranke 1 sind in einem gabelförmigen Gehäuse 3 integriert. Das Gehäuse 3 weist einen Grundkörper 3a auf, an welchen seitlich zwei Gabelarme 3b, 3c ausmünden. Die Gabelarme 3b, 3c verlaufen parallel in Abstand zueinander. Der Zwischenraum zwischen den Gabelarmen 3b, 3c bildet den Überwachungsbereich, in welchem Objekte 2 detektierbar sind. Das Gehäuse 3 kann generell aus Kunststoff oder aus Metall bestehen.

In dem Gehäuse 3 ist eine Leiterplatte 4 gelagert, auf welcher ein Lichtstrahlen 5 emittierender Sender 6 und ein Lichtstrahlen 5 empfangender Empfänger 7 angeordnet und fixiert sind. Der Sender 6 kann von einer Leuchtdiode, der Empfänger 7 von einer Photodiode gebildet sein. Weiterhin sind auf der Leiterplatte 4 die Elektronikkomponenten einer Auswerteeinheit 8 integriert. Die Auswerteeinheit 8 dient einerseits zur Ansteuerung des Senders 6 und andererseits zur Auswertung der Empfangssignale des Empfängers 7.

Die Gabellichtschranke 1 arbeitet in bekannter Weise nach dem Lichtschrankenprinzip. Die vom Sender 6 emittierten Lichtstrahlen 5 sind auf das zu detektierende Objekt 2 gerichtet. Der Anteil der Lichtstrahlen 5, der das Objekt 2 durchsetzt, ist auf den Empfänger 7 geführt.

In Abhängigkeit der Empfangssignale des Empfängers 7 wird in der Auswerteeinheit 8 ein Objektfeststellungssignal generiert. Im vorliegenden Fall wird durch eine Schwellwertbewertung der Empfangssignale als Objektfeststellungssignal ein binäres Schaltsignal generiert, dessen Schaltzustände angeben, ob ein Objekt 2 im Überwachungsbereich vorhanden ist oder nicht. Alternativ können als Objektfeststellungssignal auch analoge oder binäre Signale generiert werden, welche beispielsweise Informationen über mehrlagige oder mehrschichtige Objekte 2 liefern. Das Objektfeststellungssignal wird über einen Ausgang ausgegeben, der beispielsweise in einem nicht dargestellten Stecker integriert sein kann, über welchen auch die Stromversorgung der Gabellichtschranke 1 erfolgt. Der Stecker ist in einer Wand des Gehäuses 3 integriert.

In der Wand an der Oberseite des unteren Gabelarms 3b befindet sich ein erstes Fenster, welches eine Austrittsfläche 9 bildet, durch welche die Lichtstrahlen 5 aus dem Gehäuse 3 herausgeführt und dann auf das Objekt 2 treffen.

In der Wand an der Unterseite des oberen Gabelarms 3c befindet sich ein zweites Fenster, welches eine Eintrittsfläche 10 bildet, durch welche die Lichtstrahlen 5, die das Objekt 2 durchsetzen wieder in das Gehäuse 3 geführt sind.

Wie aus Figur 1 ersichtlich, ist die Leiterplatte 4 im oberen Gabelarm 3c des Gehäuses 3 angebracht, wobei der Sender 6 und der Empfänger 7 an der Unterseite der Leiterplatte 4 angeordnet sind. Der Empfänger 7 ist dabei auf der Leiterplatte 4 so platziert, dass dieser in geringem Abstand der Eintrittsfläche 10 gegenüberliegt, so dass die durch die Eintrittsfläche 10 geführten Lichtstrahlen 5 direkt auf den Empfänger 7 geführt sind. Prinzipiell könnte dem Empfänger 7 noch eine Empfangsoptik vorgeordnet sein. Mit dieser Empfangsoptik können die die Eintrittsfläche 10 durchsetzenden Lichtstrahlen 5 auf den Empfänger 7 fokussiert werden.

Die vom Sender 6 emittierten Lichtstrahlen 5 werden über einen Lichtleiter 11 zur Austrittsfläche 9 geführt. Ein Ende des Lichtleiters 11 ist unmittelbar vor dem Sender 6 angeordnet, so dass die vom Sender 6 emittierten Lichtstrahlen 5 vollständig in den Lichtleiter 11 eingekoppelt werden. Zur vollständigen Einkopplung können zwischen Sender 6 und Lichtleiter 11 auch geeignete optische Mittel vorgesehen sein. Wie aus Figur 1 ersichtlich, ist der Sender 6 auf der Leiterplatte 4 so positioniert, dass dieser in den Bereich des Grundkörpers 3a des Gehäuses 3 ragt. Im Bereich des Grundkörpers 3a verläuft der Lichtleiter 11 längs einer Geraden in vertikaler Richtung. Im Bereich des unteren Gabelarms 3b verläuft ein Segment des Lichtleiters 11 längs einer Geraden in horizontaler Richtung. Zwischen diesen beiden geradlinig verlaufenden Segmenten des Lichtleiters 11 ist ein gekrümmtes Segment des Lichtleiters 11 vorgesehen, durch welches eine 90°-Umlenkung des Lichtleiters 11 und der darin geführten Lichtstrahlen 5 erhalten wird. Wie aus Figur 1 ersichtlich ist, weist eine Grenzfläche des Lichtleiters 11 im gekrümmten Bereich eine Abschrägung 12 auf, die in einer um 45° zur Horizontalen geneigten Ebene verläuft. An dieser Grenzfläche werden die Lichtstrahlen 5 im Lichtleiter 11 reflektiert und so um 90° umgelenkt.

Im Bereich von der Austrittsfläche 9 befindet sich ein weiteres derartiges gekrümmtes Segment des Lichtleiters 11 mit einer weiteren Abschrägung 13. An dieses Segment schließt ein kurzes Endstück des Lichtleiters 11 an, dessen freies Ende dicht vor der Austrittsfläche 9 liegt. Mit dieser zweiten Abschrägung 13 erfolgt eine weitere 90°-Umlenkung der Lichtstrahlen 5 im Lichtleiter 11, so dass diese im Endstück des Lichtleiters 11 in vertikaler Richtung zur Austrittsfläche 9 hin verlaufen.

Damit die Lichtstrahlen 5 vollständig im Lichtleiter 11 geführt sind, kann dessen Mantelfläche verspiegelt beziehungsweise metallisiert sein.

An dem freien Ende des Lichtleiters 11 ist eine Auskoppeloptik 14 vorgesehen. Die Auskoppeloptik 14 besteht aus Kunststoff und ist auf das freie Ende des Lichtleiters 11 aufgespritzt. Durch die Auskoppeloptik 14 wird ein gebündelter aus dem Lichtleiter 11 austretender Lichtstrahl erhalten.

Die vom Sender 6 emittierten Lichtstrahlen 5 werden somit in den Lichtleiter 11 eingekoppelt und in diesem zur Austrittsfläche 9 geführt. Dicht vor der Austrittsfläche 9 treten die Lichtstrahlen 5 aus dem Lichtleiter 11 aus, durchsetzen die Austrittsfläche 9 und treffen dann auf das Objekt 2. Die Anteile der Lichtstrahlen 5, die das Objekt 2 durchsetzen, beziehungsweise die gesamten Lichtstrahlen 5 bei freiem Überwachungsbereich, durchsetzen die Eintrittsfläche 10 und treffen dann auf den Empfänger 7.

Da im unteren Gabelarm 3b nur der Lichtleiter 11 geführt ist, weist dieser eine geringere Bauhöhe als der obere Gabelarm 3c, in welchem die Leiterplatte 4 mit dem Sender 6 und den Empfänger 7 untergebracht ist, auf.

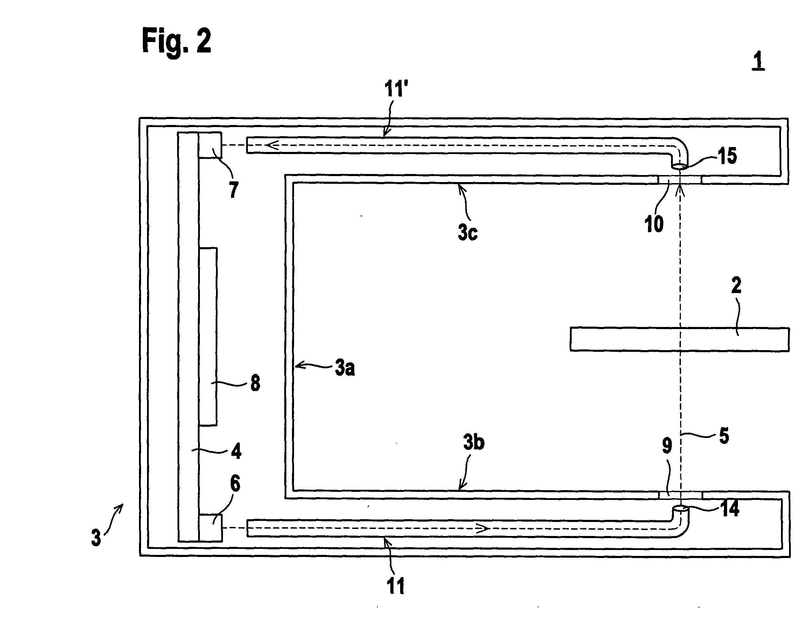

Figur 2 zeigt eine zweite Ausführungsform der Gabellichtschranke 1. Die Gabellichtschranke 1 gemäß Figur 2 entspricht hinsichtlich ihrer Funktionsweise der Gabellichtschranke 1 gemäß Figur 1. Auch die Gabellichtschranke 1 gemäß Figur 2 weist ein gabelförmiges Gehäuse 3 mit einem Grundkörper 3a und zwei parallel verlaufenden Gabelarmen 3b, 3c auf. Entsprechend zur Ausführungsform gemäß Figur 1 ist auch bei der Gabellichtschranke 1 gemäß Figur 2 im unteren Gabelarm 3b die Austrittsfläche 9 und im oberen Gabelarm 3c die Eintrittsfläche 10 vorgesehen, welche jeweils von einem in der Gehäusewand integrierten Fenster gebildet sind.

Der Sender 6 und der Empfänger 7 sind wiederum auf einer Leiterplatte 4 mit den Elektronikkomponenten der Auswerteeinheit 8 integriert. Im Unterschied zur Ausführungsform gemäß Figur 1 ist jedoch im vorliegenden Fall die Leiterplatte 4 in Bereich des Grundkörpers 3a integriert, wobei die Leiterplatte 4 in einer vertikalen Ebene orientiert ist. Der Sender 6 und der Empfänger 7 sind auf der den Gabelarmen 3b, 3c zugewandten Seiten der Leiterplatte 4 platziert.

Vom Sender 6 führt wiederum ein Lichtleiter 11 zur Austrittsfläche 9, so dass die Lichtstrahlen 5 vom Sender 6 zur Austrittsfläche 9 im Lichtleiter 11 verlaufend geführt sind. Der Lichtleiter 11 verläuft in horizontaler Richtung längs einer Geraden innerhalb des unteren Gabelarms 3b. Lediglich im Bereich des vorderen Endes ist ein gekrümmtes Segment des Lichtleiters 11 vorgesehen, an welches ein in vertikaler Richtung verlaufendes Endstück des Lichtleiters 11 anschließt. Im vorliegenden Fall erfolgt eine 90°-Umlenkung der Lichtstrahlen 5 im Lichtleiter 11 allein durch die Krümmung des gekrümmten Segments, das heißt das Segment ist nicht abgeschrägt. Am freien Ende des Lichtleiters 11 ist wieder eine Auskoppeloptik 14 vorgesehen.

Weiterhin führt vom Empfänger 7 ein zweiter Lichtleiter 11' weg. Die Form des Lichtleiters 11' entspricht der Form des Lichtleiters 11, das heißt der Lichtleiter 11' verläuft im oberen Gabelarm 3c längs einer Geraden in horizontaler Richtung. Lediglich im vorderen Bereich des Lichtleiters 11' ist ein gekrümmtes Segment zur 90°-Umlenkung der Lichtstrahlen 5 vorgesehen. An dieses Segment schließt ein in vertikaler Richtung verlaufendes Endstück an. Am freien Ende des Endstücks des Lichtleiters 11' befindet sich eine Einkoppeloptik 15 der aus dem Überwachungsbereich ankommenden Lichtstrahlen 5. Die Einkoppeloptik 15 besteht ebenso wie die Auskoppeloptik 14 aus Kunststoff und ist auf das freie Ende des Lichtleiters 11' aufgespritzt.

Zur Detektion von Objekten 2 werden die vom Sender 6 emittierten Lichtstrahlen 5 in den Lichtleiter 11 eingekoppelt und in diesem verlaufend zur Austrittsfläche 9 geführt. Die aus dem Lichtleiter 11 austretenden Lichtstrahlen 5 werden durch die Austrittsfläche 9 in den Überwachungsbereich zwischen den Gabelarmen 3b, 3c geführt. Ist ein Objekt 2 im Überwachungsbereich vorhanden, gelangt nur der das Objekt 2 durchsetzende Teil der Lichtstrahlen 5 zur Eintrittsfläche 10. Ist kein Objekt 2 im Überwachungsbereich vorhanden, gelangen die Lichtstrahlen 5 vollständig zur Eintrittsfläche 10. Die die Eintrittsfläche 10 durchsetzenden Lichtstrahlen 5 werden über die Einkoppeloptik 15 in den Lichtleiter 11' eingekoppelt und in diesem verlaufend zum Empfänger 7 geführt.

Da bei dem Ausführungsbeispiel die Leiterplatte 4 mit dem Sender 6 und dem Empfänger 7 im Bereich des Grundkörpers 3a des Gehäuses 3 platziert ist und somit nur die Lichtleiter 11, 11' in den Gabelarmen 3b, 3c geführt sind, können beide Gabelarme 3b, 3c eine sehr geringe Bauhöhe aufweisen.

### Bezugszeichenliste

- (1): Gabellichtschranke
- (2): Objekt
- (3): Gehäuse
- (3a): Grundkörper
- (3b): Gabelarm
- (3c): Gabelarm
- (4): Leiterplatte
- (5): Lichtstrahlen
- (6): Sender
- (7): Empfänger
- (8): Auswerteeinheit
- (9): Austrittsfläche
- (10): Eintrittsfläche
- (11): Lichtleiter
- (11'): Lichtleiter
- (12): Abschrägung
- (13): Abschrägung
- (14): Auskoppeloptik
- (15): Einkoppeloptik

## Patentansprüche

1. Gabellichtschranke mit einem zwei Gabelarme aufweisenden Gehäuse, in welchem ein Lichtstrahlen emittierender Sender, ein Lichtstrahlen empfangender Empfänger und eine Auswerteeinheit, in welcher in Abhängigkeit der Empfangssignale am Ausgang des Empfängers ein Objektfeststellungssignal generiert wird, integriert sind, wobei ein zu detektierendes Objekt zwischen den Gabelarmen des Gehäuses angeordnet ist und die vom Sender emittierten Lichtstrahlen an einer Austrittsfläche eines ersten Gabelarms aus dem Gehäuse herausgeführt sind und auf das Objekt treffen und der das Objekt durchsetzende Teil der Lichtstrahlen an einer Eintrittsfläche des zweiten Gabelarms in das Gehäuse geführt ist, **dadurch gekennzeichnet, dass** der Sender (6) und der Empfänger (7) auf einer Leiterplatte (4) angeordnet sind, und dass vom Sender (6) ein Lichtleiter (11) zur Austrittsfläche (9) und/oder vom Empfänger (7) ein Lichtleiter (11') zur Eintrittsfläche (10) geführt ist, wobei in dem oder den Lichtleitern (11, 11') die Lichtstrahlen (5) verlaufen.

2. Gabellichtschranke nach Anspruch 1, **dadurch gekennzeichnet, dass** die die Auswerteeinheit (8) bildenden Elektronikkomponenten auf der Leiterplatte (4) angeordnet sind.

3. Gabellichtschranke nach einem der Ansprüche 1 oder 2, **dadurch gekennzeichnet, dass** das Gehäuse (3) einen Grundkörper (3a) aufweist, an welchen die Gabelarme (3b, 3c) mit parallel zueinander verlaufenden Längsachsen ausmünden.

4. Gabellichtschranke nach einem der Ansprüche 1 bis 3, **dadurch gekennzeichnet, dass** die Leiterplatte (4) im Bereich eines Gabelarms (3c) angeordnet ist und ein Lichtleiter (11) vom Sender (6) oder Empfänger (7) in den anderen Gabelarm (3b) geführt ist, so dass dessen freies Ende der Austrittsfläche (9) oder der Eintrittsfläche (10) gegenüber liegt.

5. Gabellichtschranke nach einem der Ansprüche 1 bis 4, **dadurch gekennzeichnet, dass** die Leiterplatte (4) im Bereich des Grundkörpers (3a) des Gehäuses (3) angeordnet ist, und dass ein erster Lichtleiter (11) vom Sender (6) in einen Gabelarm (3b) geführt ist, so dass dessen freies Ende der Austrittsfläche (9) gegenüberliegt, und dass ein weiterer Lichtleiter (11') vom Empfänger (7) in den anderen Gabelarm (3c) geführt ist, so dass dessen freies Ende der Eintrittsfläche (10) gegenüber liegt.

6. Gabellichtschranke nach einem der Ansprüche 1 bis 5, **dadurch gekennzeichnet, dass** am freien Ende des oder jedes Lichtleiters (11, 11') eine Auskoppeloptik (14) oder eine Einkoppeloptik (15) vorgesehen ist.

7. Gabellichtschranke nach Anspruch 6, **dadurch gekennzeichnet, dass** die Auskoppeloptik (14) oder eine Einkoppeloptik (15) aus Kunststoff besteht.

8. Gabellichtschranke nach Anspruch 7, **dadurch gekennzeichnet, dass** die Auskoppeloptik (14) oder die Einkoppeloptik (15) an das freie Ende des Lichtleiters (11) angespritzt ist.

9. Gabellichtschranke nach einem der Ansprüche 1 bis 8, **dadurch gekennzeichnet, dass** der oder jeder Lichtleiter (11, 11') wenigstens zwei in einem vorgegebenen Winkel zueinander orientierte, längs einer Geraden verlaufende Segmente aufweist.

10. Gabellichtschranke nach Anspruch 9, **dadurch gekennzeichnet, dass** die Segmente des Lichtleiters (11) in einem Winkel um 90° zueinander orientiert sind.

11. Gabellichtschranke nach einem der Ansprüche 9 oder 10, **dadurch gekennzeichnet, dass** zwischen den beiden längs einer Geraden verlaufenden Segmenten des Lichtleiters (11) ein gekrümmtes Segment des Lichtleiters (11) vorgesehen ist.

12. Gabellichtschranke nach Anspruch 11, **dadurch gekennzeichnet, dass** der Lichtleiter (11) im Bereich des oder jedes gekrümmten Segments eine Abschrägung (12, 13) aufweist.

13. Gabellichtschranke nach einem der Ansprüche 1 bis 12, **dadurch gekennzeichnet, dass** die Mantelfläche des oder jedes Lichtleiters (11, 11') verspiegelt ist.

14. Gabellichtschranke nach einem der Ansprüche 1 bis 13, **dadurch gekennzeichnet, dass** die Mantelfläche des oder jedes Lichtleiters (11, 11') metallisiert ist.

15. Gabellichtschranke nach einem der Ansprüche 1 bis 14, **dadurch gekennzeichnet, dass** die Austrittsfläche (9) und die Eintrittsfläche (10) jeweils von einem Fenster in der Wand des jeweiligen Gabelarms (3b, 3c) gebildet ist.
